(19) Europäisches Patentamt
European Patent Office
Office européen des brevets

(11) EP 4 361 794 A1

(12) EUROPEAN PATENT APPLICATION

(43) Date of publication:
01.05.2024 Bulletin 2024/18

(51) International Patent Classification (IPC):
G06F 7/544 (2006.01)

(21) Application number: 23204752.2

(22) Date of filing: 19.10.2023

(52) Cooperative Patent Classification (CPC):
G06F 7/5443; G06F 2207/4814; G06N 3/065

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 26.10.2022 KR 20220139677
14.02.2023 KR 20230019546

(71) Applicants:
• Samsung Electronics Co., Ltd.
Suwon-si, Gyeonggi-do 16677 (KR)
• Korea Advanced Institute of Science and Technology
Daejeon (KR)

(72) Inventors:
• YI, Donghyeon
Daejeon (KR)
• JE, Minkyu
Daejeon (KR)

(74) Representative: Marks & Clerk LLP
15 Fetter Lane
London EC4A 1BW (GB)

(54) PROCESSING ELEMENT AND METHOD OF OPERATING THE SAME

(57) A processing element includes an analog operation circuit configured to receive input data from an input buffer and to generate one or more output currents associated with a multiplication operation of the input data and weights based on a bit-precision of stored weights, one or more analog-to-digital converters (ADCs) each configured to convert the one or more output currents into one or more digital codes, and a digital operation circuit configured to perform an addition operation using the one or more digital codes based on the bit-precision of the weight and to perform a summation operation on a resultant value of the addition operation based on a bit-precision of the input data.

FIG. 1

200: PE
300 :ANALOG CALCULATOR

**Description**

BACKGROUND

Various example embodiments relate to a processing element, and more particularly, to a processing element and/or a method of operating the same.

A deep neural network consists of numerous operations. For example, an operation in a deep neural network may include an iterative multiply-accumulate (MAC) operation between input data and a weight. As the need for deep learning increases, an artificial neural network accelerator that performs efficient and accurate multiplication-summation operations is required.

In addition, because of process error of analog signals, characteristics of analog signals that are vulnerable to temperature fluctuations, and overhead of analog signal processing, a processor that processes all operations in an analog form has a problem to perform operations required for artificial neural networks based on operators of 8 bits or more.

The artificial neural network accelerator may perform an iterative multiplicationaccumulation operation based on a processing element.

SUMMARY

Some example embodiments may provide a processing element and/or a method of operating the processing element.

According to some example embodiments, there is provided a processing element comprising an analog operation circuit configured to receive input data from an input buffer and to generate one or more output currents, the one or more output currents associated with a multiplication operation of the input data with weights, the multiplication operation based on a bit-precision of stored weights, one or more analog-to-digital converters (ADCs) each configured to convert the one or more output currents into one or more digital codes, and a digital operation circuit configured to perform an addition operation using the one or more digital codes based on the bit-precision of the stored weights and to perform a summation operation on a resulting value of the addition operation based on a bit-precision of the input data.

Alternatively or additionally according to some example embodiments, there is provided a processing element including a weight cell array including 16 cells that have a 4 by 4 structure and each configured to store a weight of 1 bit, wherein a first column of the weight cell array is a least significant bit (LSB), a second column of the weight cell array is a left bit of the LSB, a third column of the weight cell array is a left bit of the second column, and a fourth column of the weight cell array is a most significant bit (MSB), a first analog-to-digital converter (ADC) connected to a first row of the weight cell array, a second ADC connected to a second row of the weight cell array, a third ADC connected to a third row of the weight cell array, and a fourth ADC connected to a fourth row of the weight cell array, a digital code adder connected to the first ADC, the second ADC, the third ADC, and the fourth ADC, and an input data accumulator connected to the digital code adder. The weight cell array is configured to receive input data from an input buffer, and to generate a first output current, a second output current, a third output current, and a fourth output current, the first through fourth output current associated with performing a multiplication operation between the input data and the weight, the multiplication operation based on a bit-precision of the weight, the first ADC is configured to covert the first output current into a first digital code, the second ADC is configured to convert the second output current into a second digital code, the third ADC is configured to convert the third output current into a third digital code, and the fourth ADC is configured to convert the fourth output current into a fourth digital code, the digital code adder is configured to generate a fifth digital code by performing an addition operation using the first digital code, the second digital code, the third digital code, and the fourth digital code based on the bit-precision of the weight, and the input data accumulator is configured to sum the fifth digital code based on a bit-precision of the input data.

Alternatively or additionally according to some example embodiments, there is provided an artificial neural network accelerator including an input buffer, and a plurality of processing elements having a systolic array structure. A first group of the plurality of processing elements are configured to receive input data from the input buffer. Each of the processing elements of the first group includes a weight cell array including 16 cells that have a 4 by 4 structure and each configured to store a weight by 1 bit, wherein a first column is a least significant bit (LSB), a second column is a left bit of the LSB, a third column is a left bit of the second column, and a fourth column is a most significant bit (MSB), a first analog-to-digital converter (ADC) connected to a first row of the weight cell array, a second ADC connected to a second row of the weight cell array, a third ADC connected a third row of the weight cell array, and a fourth ADC connected to a fourth row of the weight cell array, a digital code adder connected to the first ADC, the second ADC, the third ADC, and the fourth ADC, and an input data accumulator connected to the digital code adder. The weight cell array is configured to receive input data, and to generate a first output current, a second output current, a third output current, and a fourth output current that are associated with a multiplication operation between the weight and the input data, the multiplication operation based on a bit-precision of the weight, the first ADC is configured to convert the first output current into a first digital code, the second ADC is configured to convert the second output current into a second digital code, the third ADC is configured to convert the third output current into a third digital code, and the fourth ADC is configured to convert the fourth output current into a fourth digital code, the digital code adder is configured to generate a fifth digital code by performing an addition operation using the first digital code, the second digital code, the third digital code, and the fourth digital code based on the bit-precision of the weight, and the input data accumulator is configured to sum the fifth digital code based on the bit-precision of the input data.

At least some of the above and other features of the invention are set out in the claims.

BRIEF DESCRIPTION OF THE DRAWINGS

Embodiments will be more clearly understood from the following detailed description taken in conjunction with the accompanying drawings in which:

FIG. 1 is a block diagram of a processing element according to some example embodiments;
FIG. 2 is a block diagram of a processing element according to some example embodiments;
FIG. 3A is a block diagram illustrating input data according to bit-precision of weights according to some example embodiments;
FIG. 3B is a block diagram illustrating input data according to bit-precision of weights according to some example embodiments;
FIG. 4A is a block diagram illustrating a weight cell array and a weight column selector according to some example embodiments;
FIG. 4B is a diagram illustrating a connection relationship between a weight cell array and a weight column selector according to some example embodiments;
FIG. 4C is a diagram illustrating digital codes transmitted by a first analog-to-digital converter (ADC), a second ADC, a third ADC, and a fourth ADC to an ADC-per-cycle adder multiplexer (ADC-PCA MUX) according to some example embodiments;
FIG. 5 is a flowchart illustrating a method of operating a processing element according to some example embodiments;
FIG. 6 is a flowchart illustrating a method of operating a processing element according to some example embodiments;
FIG. 7 is a block diagram of an artificial neural network accelerator based on a systolic array structure according to some example embodiments; and
FIG. 8 is a block diagram of a wireless communication device according to some example embodiments.

DETAILED DESCRIPTION OF VARIOUS EXAMPLE EMBODIMENTS

Hereinafter, some example embodiments according to inventive concepts will be described in detail with reference to the accompanying drawings.

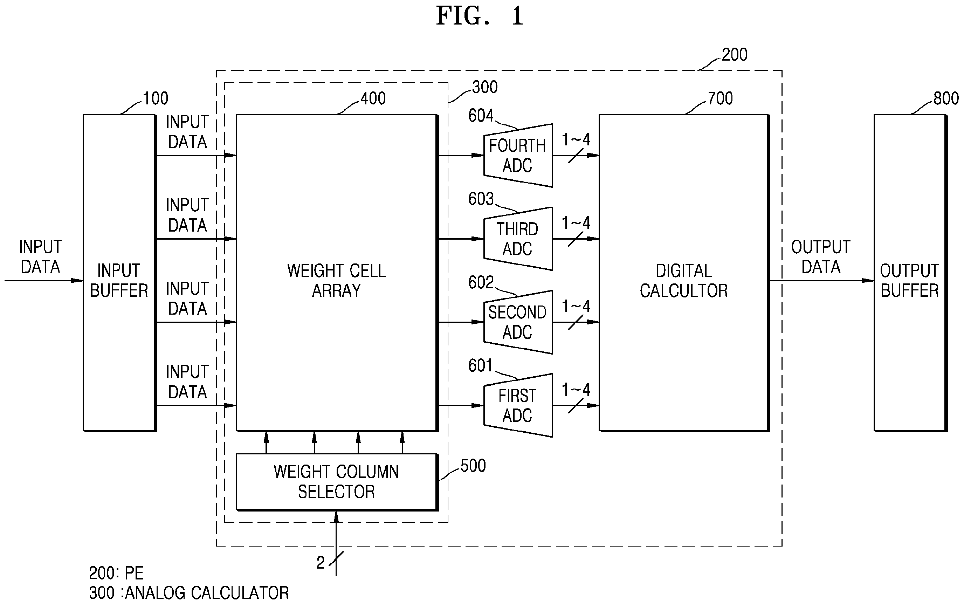

FIG. 1 is a block diagram of a processing element 200 according to some example embodiments.

Referring to FIG. 1, the processing element 200 according to some example embodiments includes an analog calculator 300, a first analog-to-digital converter (ADC) 601, a second ADC 602, a third ADC 603, a fourth ADC 604, and a digital calculator 700. The analog calculator 300 may include a weight cell array 400 and a weight column selector 500.

The weight cell array 400 may receive input data from an input buffer 100. The weight cell array 400 may generate one or more output currents for or associated with a multiplication operation of input data and weights based on a bit-precision of the weights that are stored in the weight cell array 400. As a non-limiting example, the weight cell array 400 may apply a first output current to the first ADC 601, a second output current to the second ADC 602, a third output current to the third ADC 603, and a fourth output current to the fourth ADC 604. The weight cell array 400 may include a plurality of weight cells. As a non-limiting example, the weight cell array 400 may include or have a rectangular arrangement (or a square arrangement) of weight cells, such as 16 weight cells in a 4*4 structure. Each column of the weight cell array 400 may receive a driving voltage VDD from the weight column selector 500.

The weight column selector 500 may select at least one of a first column, a second column, a third column, and a fourth column of the weight cell array 400 based on a selection signal. When the weight cell array 400 includes 4 columns, the selection signal may be 2 bits; however, example embodiments are not necessarily limited thereto.

The first ADC 601 may convert the first output current applied from the weight cell array 400 into a first digital code. The second ADC 602 may convert the second output current applied from the weight cell array 400 into a second digital code. The third ADC 603 may convert the third output current applied from the weight cell array 400 into a third digital code. The fourth ADC 604 may convert the fourth output current applied from the weight cell array 400 into a fourth digital code.

The digital calculator 700 may perform an addition calculation using the first digital code, the second digital code, the third digital code, and the fourth digital code, and the addition calculation may be based on the bit-precision of the weights. The digital calculator 700 may generate a fifth digital code based on the addition calculation. The digital calculator 700 may perform a summation operation based on the bit-precision of input data of the weight. For example, if the bit-precision of the input data is 16 bits, the digital calculator 700 may summate the fifth digital code 16 times. The digital calculator 700 may transfer the accumulated fifth digital code to an output buffer 800 as output data.

The processing element 200 according to some example embodiments may reduce an operation error by performing a multiplication operation of low bit-precision weights and input data in the analog calculator 300.

Alternatively or additionally, the processing element 200 according to some example embodiments may improve or optimize energy efficiency through the analog calculator 300 and/or may secure or help to secure flexibility of bit-precision.

Alternatively or additionally, the processing element 200 according to some example embodiments may reconfigure a signal implemented in the analog calculator 300 into a high bit-precision signal in the digital calculator 700.

In addition, the processing element 200 according to some example embodiments enables a low-power design of an artificial neural network accelerator by simultaneously performing analog signal processing and digital signal processing. That is, the processing element 200 according to some example embodiments may have low power consumption through analog mixed signal processing.

Alternatively or additionally, the processing element 200 according to some example embodiments may improve or optimize driving and/or resources of an artificial neural network accelerator by supporting an operation using various bit-precision weights.

Alternatively or additionally, the processing element 200 according to some example embodiments allows the implementation of an artificial neural network accelerator having flexible data flow.

Alternatively or additionally, the processing element 200 according to some example embodiments may implement a systolic array that increases data-reuse.

In various example embodiments, for convenience of description, it is assumed that the weight cell array 400 includes 16 weight cells, but the weight cell array 400 may include various numbers of weight cells and is not limited to example embodiments including 16 weight cells; the weight cell array 400 may include more than, or less than, 16 weight cells. The number of weight cells included in the weight cell array 400 may or may not be a square number.

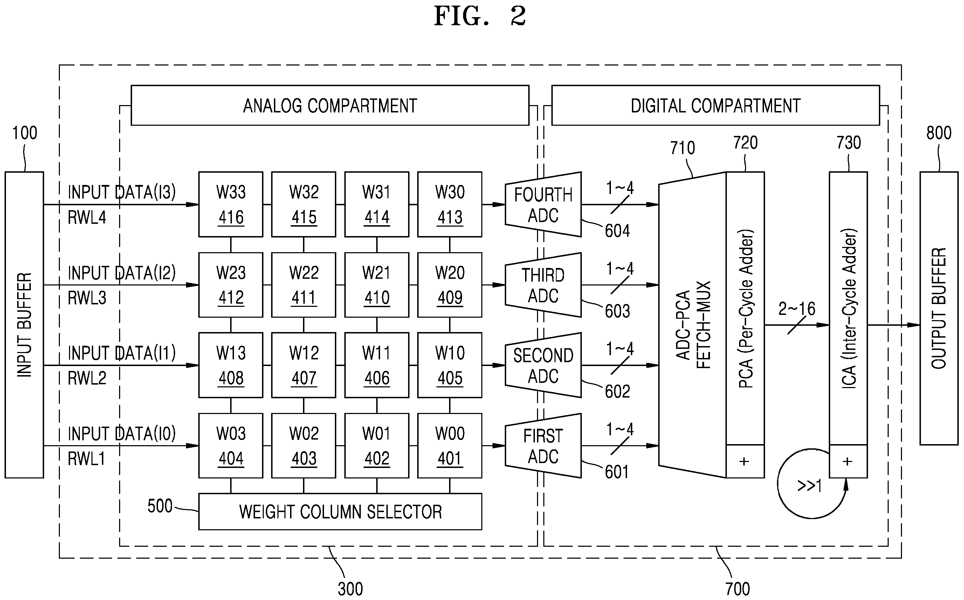

FIG. 2 is a block diagram of a processing element according to some example embodiments. FIG. 2 may be described with reference to FIG. 1, and descriptions previously given may be omitted.

Referring to FIG. 2, the analog calculator 300 may include a plurality of weight cells 401, 402, 403, 404, 405, 406, 407, 408, 409, 410, 411, 412, 413, 414, 415, and 416. Specifically, the weight cell array 400 may include a plurality of weight cells 401, 402, 403, 404, 405, 406, 407, 408, 409, 410, 411, 412, 413, 414, 415, and 416. Each of the plurality of weight cells 401, 402, 403, 404, 405, 406, 407, 408, 409, 410, 411, 412, 413, 414, 415, and 416 may store a weight of 1 bit.

A first column may be or may correspond to the least significant bit (LSB), a second column may be or more correspond to a left bit of the LSB, e.g., the second least significant bit, a third column may be a left bit of the second column, e.g., the third least significant bit, and a fourth column may be the most significant bit (MSB). The weight cells 401, 405, 409, and 413 may correspond to the first column, the weight cells 402, 406, 410, and 414 may correspond to the second column, the weight cells 403, 407, 411, and 415 may correspond to the third column, and the weight cells 404, 408, 412, and 416 may correspond to the fourth column. For example, the first column may indicate position $2^0$, the second column may indicate position $2^1$, the third column may indicate position $2^2$, and the fourth column may indicate position $2^3$.

The digital calculator 700 may include an ADC-per-cycle adder multiplexer (ADC-PCA MUX) 710, a per-cycle adder (PCA) 720, and an inter-cycle adder (ICA) 730. In some example embodiments, an adder including the ADC-PCA MUX 710 and the PCA 720 may be referred to as a digital code adder, and the ICA 730 may be referred to as an input data accumulator.

The ADC-PCA MUX 710 may receive a first digital code from the first ADC 601. The ADC-PCA MUX 710 may receive a second digital code from the second ADC 602. The ADC-PCA MUX 710 may receive a third digital code from the third ADC 603. The ADC-PCA MUX 710 may receive a fourth digital code from the fourth ADC 604. Each of the first digital code, the second digital code, the third digital code, and the fourth digital code may be a variable bit. Each of the first digital code, the second digital code, the third digital code, and the fourth digital code may be received simultaneously; example embodiments are not limited thereto. The variable bit may be any one of 1 bit, 2 bits, 3 bits, and 4 bits. The ADC-PCA MUX 710 may transfer the received first to fourth digital codes to the PCA 720.

The PCA 720 may generate a fifth digital code by performing an addition calculation using the first digital code, the second digital code, the third digital code, and the fourth digital code based on the bit-precision of the weight for each cycle. The fifth digital code may have a size in a range from 2 bits to 16 bits. A cycle may denote or may correspond to an operation method with respect to 1-bit input data. The input data may have multiple bit-precisions. For example, when the input data has a bit-precision of 16 bits, the processing element 200 may have 16 cycles. The PCA 720 may transfer the generated fifth digital code to the ICA 730.

The ICA 730 may summate or sum the fifth digital code based on the bit-precision of the input data. For example, when the input data has a bit-precision of 16 bits, the fifth digital code may be summated 16 times. As a specific non-limiting example, the ICA 730 may summate or sum the fifth digital code by right-shifting the previously input fifth digital code. In this case, the input data is input from the least significant bit (LSB), and the most significant bit (MSB) is input last.

Referring to FIG. 2, the weight of each row may have a bit-precision of at least one of 1 bit, 2 bits, 3 bits, and 4 bits. In this case, input data I0 may be input to the first row of the weight cell array 400 through RWL1. Input data 11 may be input to the second row of the weight cell array 400 through RWL2. Input data I2 may be input to the third row of the weight cell array 400 through RWL3. Input data I3 may be input to the fourth row of the weight cell array 400 through RWL4.

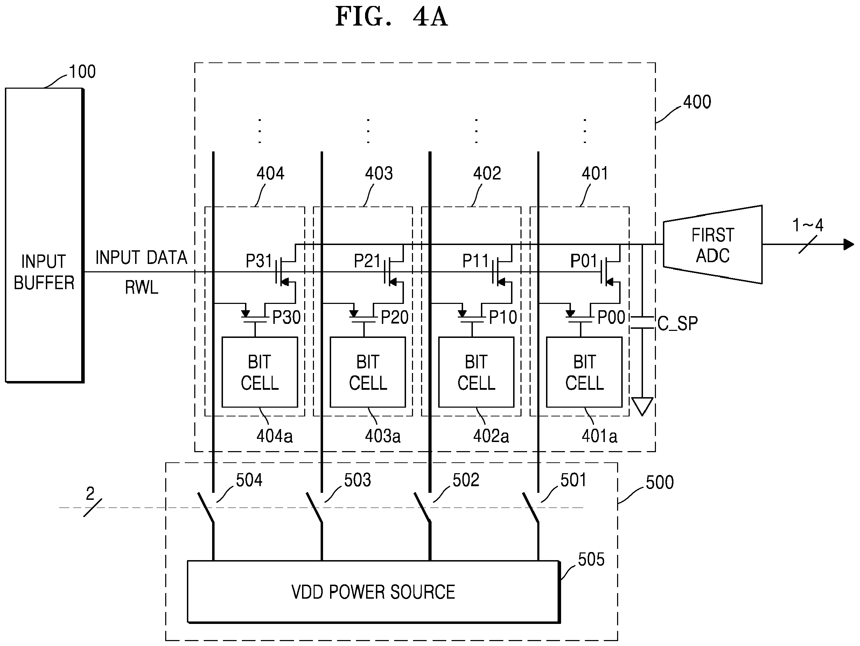

The weight cell array 400 may generate an output current for a multiplication operation of input data and weights based on the bit-precision of the weights stored in the weight cell array 400. The first ADC 601 may perform a multiplication operation between the input data I0 and the weights of the first row based on a first output current which is obtained by adding all output currents of the weight cells 401, 402, 403, and 404 of the first row. For example, the first ADC 601 may include or be connected to a first capacitor (see capacitor C_SP in FIG. 4A), may perform charge sampling on the first capacitor using the first output current, and may convert the first output current into a first digital code based on the charge sampling. The second ADC 602 may perform a multiplication operation between the input data 11 and the weights of the second row based on a second output current obtained by adding all output currents of the weight cells 405, 406, 407, and 408 of the second row. For example, the second ADC 602 may include or be connected to a second capacitor (not shown), may perform charge sampling on the second capacitor using the second output current, and may convert the second output current into a second digital code based on the charge sampling. The third ADC 603 may perform a multiplication operation between the input data I2 and the weights of the third row based on a third output current obtained by adding all output currents of the weight cells 409, 410, 411, and 412 of the third row. For example, the third ADC 603 may include or be connected to a third capacitor (not shown), may perform charge sampling on the third capacitor using a third output current, and may convert the third output current into a third digital code based on the charge sampling. The fourth ADC 604 may perform a multiplication operation between the input data I3 and the weights of the fourth row based on a fourth output current obtained by adding all output currents of the weight cells 413, 414, 415, and 416 in the fourth row. For example, the fourth ADC 604 may include or be connected to a fourth capacitor (not shown), may perform charge sampling on the fourth capacitor using a fourth output current, and may convert the fourth output current into a fourth digital code based on the charge sampling. Unlike various example embodiments described above, the first capacitor may not be included in the first ADC 601, but a multiplication operation in an analog domain may be performed when the first capacitor is included in the weight cell array 400 and is connected to the first ADC.

When the bit-precision of the weight of each row is 4 bits, each of the weight cells 401, 402, 403, and 404 of the first row may store a first weight by 1 bit. Each of the weight cells 405, 406, 407, and 408 in the second row may store a second weight by 1 bit. Each of the weight cells 409, 410, 411, and 412 in the third row may store a third weight by 1 bit. Each of the weight cells 413, 414, 415, and 416 in the fourth row may store a fourth weight by 1 bit. In this case, the fifth digital code may be a code obtained by adding the first digital code, the second digital code, the third digital code, and the fourth digital code.

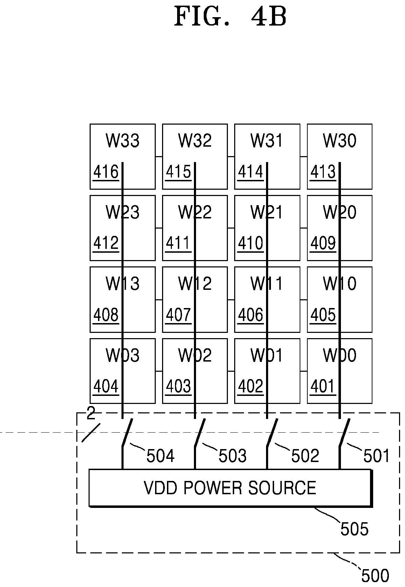

In the case when the weight of each row is any one of 1 bit, 2 bits, and 3 bits, this will be described below in detail with reference to FIGS. 4A and 4B.

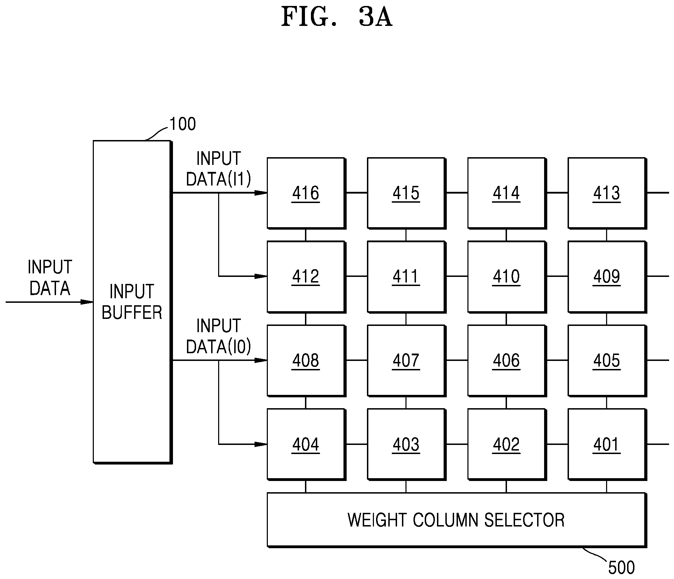

FIG. 3A is a block diagram illustrating input data according to bit-precision of weights according to some example embodiments. FIG. 3A may be described with reference to FIGS. 1 and 2, and descriptions previously given may be omitted for brevity.

Referring to FIG. 3A, the bit-precision of weights may be 8 bits. Accordingly, the weight cell array 400 may store a first weight of 8-bits in the weight cells 401, 402, 403, and 404 of the first row and the weight cells 405, 406, 407, and 408 of the second row. Furthermore, the weight cell array 400 may store a second weight of 8-bits in the weight cells 409, 410, 411, and 412 of the third row and the weight cells 413, 414, 415, and 416 of the fourth row.

One piece of input data may perform a multiplication operation with a single weight. Accordingly, the input data I0 may be input to the first row and the second row in which the first weight is stored. The input data 11 may be input to the third and fourth rows in which the second weight is stored.

The weight cells 401, 402, 403, and 404 in the first row may transfer a first output current to the first ADC 601 in response to the input data I0. The weight cells 405, 406, 407, and 408 in the second row may transfer a second output current to the second ADC 602 in response to the input data I0. The weight cells 409, 410, 411, and 412 in the third row may transfer a third output current to the third ADC 603 in response to the input data 11. The weight cells 413, 414, 415, and 416 in the fourth row may transfer a fourth output current to the fourth ADC 604 in response to the input data I1.

The first ADC 601 may perform a multiplication operation between the first weight of the first row and the input data I0 by converting the first output current into a first digital code. The second ADC 602 may perform a multiplication operation between the first weight of the second row and the input data I0 by converting the second output current into a second digital code. The third ADC 603 may perform a multiplication operation between the second weight of the third row and the input data I1 by converting the third output current into a third digital code. The fourth ADC 604 may perform a multiplication operation between the second weight of the fourth row and the input data I1 by converting the fourth output current into a fourth digital code. Accordingly, the processing element 200 may generate an operation result for high bit-precision by using an operation result based on low bit-precision in an analog domain.

The ADC-PCA MUX 710 may receive the first digital code from the first ADC 601. The ADC-PCA MUX 710 may receive the second digital code from the second ADC 602. The ADC-PCA MUX 710 may receive the third digital code from the third ADC 603. The ADC-PCA MUX 710 may receive the fourth digital code from the fourth ADC 604. The ADC-PCA MUX 710 may transfer the received first to fourth digital codes to the PCA 720.

The PCA 720 may generate a fifth digital code by performing an addition operation using the first digital code, the second digital code, the third digital code, and the fourth digital code based on the bit-precision of the weight for each cycle. For example, the PCA 720 may perform a multiplication of the first weight with the input data I0 in relation to the first weight having a bit-precision of 8 bits by adding a digital code obtained by multiplying the second digital code by 16 and the first digital code. In addition, the PCA 720 may perform a multiplication of the second weight with the input data I1 in relation to the second weight having a bit-precision of 8 bits by adding a digital code obtained by multiplying the fourth digital code by 16 and the third digital code. In addition, the PCA 720 may perform a multiplicationaccumulation (MAC) operation on the input data I0, the input data I1, the first weight, and the second weight by adding both a digital code obtained by multiplying the first digital code and the second digital code by 16 and a digital code obtained by multiplying the third digital code and the fourth digital code by 16.

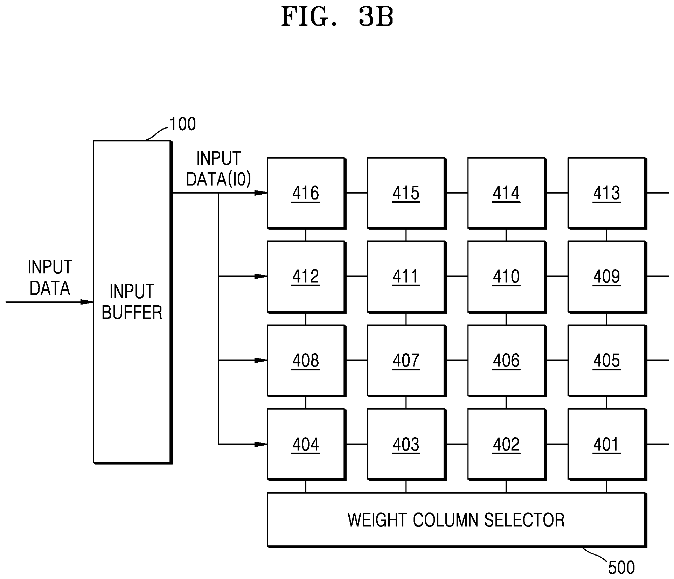

FIG. 3B is a block diagram illustrating input data according to bit-precision of weights according to some example embodiments. FIG. 3B may be described with reference to FIGS. 1, 2, and 3A, and descriptions previously given may be omitted.

Referring to FIG. 3B, the bit-precision of weights may be 16 bits. Accordingly, the weight cell array 400 may store 16-bit first weights to the weight cells 401, 402, 403, and 404 in the first row, the weight cells 405, 406, 407, and 408 in the second row, the weight cells 409, 410, 411, and 412 in the third row, and the weight cells 413, 414, 415, and 416 in the fourth row. That is, the weight cell array 400 may store 1 bit of the first weight in each weight cell.

One input data may perform a multiplication operation with a single weight. Accordingly, the input data I0 may be input to the first row, the second row, the third row, and the fourth row in which the first weight is stored.

The weight cells 401, 402, 403, and 404 in the first row may transfer a first output current to the first ADC 601 in response to the input data I0. The weight cells 405, 406, 407, and 408 in the second row may transfer a second output current to the second ADC 602 in response to the input data I0. The weight cells 409, 410, 411, and 412 in the third row may transfer a third output current to the third ADC 603 in response to the input data I0. The weight cells 413, 414, 415, and 416 in the fourth row may transfer a fourth output current to the fourth ADC 604 in response to the input data I0.

The first ADC 601 may perform a multiplication operation between the first weight of the first row and the input data I0 by converting the first output current into the first digital code. The second ADC 602 may perform a multiplication operation between the first weight of the second row and the input data I0 by converting the second output current into a second digital code. The third ADC 603 may perform a multiplication operation between the first weight of the third row and the input data I0 by converting the third output current into a third digital code. The fourth ADC 604 may perform a multiplication operation between the first weight of the fourth row and the input data I0 by converting the fourth output current into a fourth digital code. Accordingly, the processing element 200 may generate an operation result for high bit-precision by using an operation result based on low bit-precision in an analog domain.

The PCA 720 may generate a fifth digital code by performing an addition operation using the first digital code, the second digital code, the third digital code, and the fourth digital code based on the bit-precision of the weight for each cycle. For example, the PCA 720 may perform a multiplication operation between the first input data I0 and the first weight in relation to the first weight having a bit-precision of 16 bits by adding all of a digital code obtained by multiplying the first digital code and the second digital code by 16, a digital code obtained by multiplying the third digital code by $16^2$, and a digital code obtained by multiplying the fourth digital code by $16^3$.

FIG. 4A is a block diagram illustrating a weight cell array and a weight column selector according to some example embodiments. FIG. 4A may be described with reference to FIGS. 1 and 2.

FIG. 4A illustrates weight cells 401, 402, 403, and 404 of a first row of the weight cell array 400 according to some example embodiments. The weight cell 401 may include a PMOS transistor P00, a PMOS transistor P01, and a bit cell 401a. The weight cell 402 may include a PMOS transistor P10, a PMOS transistor P11, and a bit cell 402a. The weight cell 403 may include a PMOS transistor P20, a PMOS transistor P21, and a bit cell 403a. The weight cell 404 may include a PMOS transistor P30, a PMOS transistor P31, and a bit cell 404a. Each of the bit cells 401a, 402a, 403a, and 404a may store a weight. The PMOS transistor P00, the PMOS transistor P01, the PMOS transistor P10, the PMOS transistor P11, the PMOS transistor P20, the PMOS transistor P21, the PMOS transistor P30, and the PMOS transistor P31 may operate as a current control circuit. The weight cells 401, 402, 403, and 404 may control the magnitude of a first output current by controlling a current of each cell based on the PMOS transistors P00, P01, P10, P11, P20, P21, P30, and P31.

Each of the PMOS transistors P00, P01, P10, P11, P20, P21, P30, P31 may have the same physical and/or electrical characteristics; however, example embodiments are not limited thereto. For example, at least one of the PMOS transistors P00, P01, P10, P11, P20, P21, P30, P31 may have a different physical and/or electrical characteristic than at least another one of the PMOS transistors P00, P01, P10, P11, P20, P21, P30, P31.

Transistors included in the weight cells of other rows in the weight cell array 400 may be similarly arranged as those of the first row of the weight cell array; example embodiments are not limited thereto.

Capacitor C_SP may be or may correspond to a capacitor included in or connected to the first ADC 601.

The weight column selector 500 may include a first switch 501, a second switch 502, a third switch 503, a fourth switch 504, and a VDD power source 505. The weight column selector 500 may receive a selection signal, and based on the selection signal, may open or close the first switch 501, the second switch 502, the third switch 503, and the fourth switch 504, respectively. As described, the selection signal may be 2 bits; however, example embodiments are not limited thereto. Each of the first to fourth switches 501 to 504 may be or may include transistors such as NMOS transistors; example embodiments are not limited thereto.

Hereinafter, an operation when the bit-precision of the weight is 3 bits is described.

Referring back to FIG. 2, when the bit-precision of the weight is 3 bits, the input data I0 may be input to a first row of the weight cell array 400, the input data I1 may be input to a second row of the weight cell array 400, the input data I2 may be input to a third row of the weight cell array 400, and the input data I3 may be input to a fourth row of the weight cell array 400. The weight cell array 400 may store a first weight of 3 bits in the weight cells 401, 402, and 403 of the first row. The weight cell array 400 may store a second weight of 3 bits in the weight cells 405, 406, and 407 of the second row. The weight cell array 400 may store a third weight of 3 bits in the weight cells 409, 410, and 412 of the third row. The weight cell array 400 may store a fourth weight of 3 bits in the weight cells 413, 414, and 415 of the fourth row.

When the bit-precision of the weight is 3 bits, the weight column selector 500 may open (or turn off) the fourth switch 504 and may close (or turn on) each of the first switch 501, the second switch 502, and the third switch 503. For example, the weight column selector 500 may cut off power supply to the PMOS transistors included in the fourth column weight cells 404, 408, 412, and 416 of the weight cell array 400. However, the weight cells 404, 408, 412, and 416 in the fourth column may retain previously stored weights. In addition, the weight column selector 500 may supply power to the PMOS transistors included in the first column weight cells 401, 405, 409, and 413, the second column weight cells 402, 406, 410, and 414, and the third column weight cells 403, 407, and 411, and 415.

The weight cells 401, 402, and 403 in the first row may transfer a first output current to the first ADC 601 in response to the input data I0. The weight cells 405, 406, and 407 in the second row may transfer a second output current to the second ADC 602 in response to the input data I1. The weight cells 409, 410, and 411 in the third row may transfer a third output current to the third ADC 603 in response to the input data I2. The weight cells 413, 414, and 415 in the fourth row may transfer a fourth output current to the fourth ADC 604 in response to the input data I3.

The first ADC 601 may perform a multiplication operation between the first weight and the input data I0 by converting the first output current into a first digital code. The second ADC 602 may perform a multiplication operation between the second weight and the input data I1 by converting the second output current into a second digital code. The third ADC 603 may perform a multiplication operation between the third weight and the input data I2 by converting the third output current into a third digital code. The fourth ADC 604 may perform a multiplication operation between the fourth weight and the input data I3 by converting the fourth output current into a fourth digital code.

The PCA 720 may perform a MAC operation with respect to the input data I0, the input data I1, the input data I2, and the input data I3, the first weight, the second weight, the third weight, and the fourth weight by adding all of the first digital code, the second digital code, the third digital code, and the fourth digital code.

Hereinafter, an operation when the bit-precision of the weight is 2 bits is described.

Referring back to FIG. 2, when the bit-precision of the weight is 2 bits, the input data I0 may be input to the first row of the weight cell array 400, the input data I1 may be input to the second row of the weight cell array 400, the input data I2 may be input to the third row of the weight cell array 400, and the input data I3 may be input to the fourth row of the weight cell array 400. The weight cell array 400 may store a first weight of 2 bits in the weight cells 401 and 402 of the first row. The weight cell array 400 may store a second weight of 2 bits in the weight cells 405 and 406 of the second row. The weight cell array 400 may store a third weight of 2 bits in the weight cells 409 and 410 of the third row. The weight cell array 400 may store a fourth weight of 2 bits in the weight cells 413 and 414 of the third row.

When the bit-precision of the weight is 2 bits, the weight column selector 500 may open the fourth switch 504 and the third switch 503, and may close the first switch 501 and the second switch 502. For example, the weight column selector 500 may cut off power supply to the PMOS transistors included in the fourth column weight cells 404, 408, 412, and 416 and the third column weight cells 403, 407, 411, and 415 of the weight cell array 400. However, the weight cells 404, 408, 412, and 416 in the fourth column and the weight cells 403, 407, 411, and 415 in the third column may retain previously stored weights. In some example embodiments, the weight column selector 500 may supply power to the PMOS transistors included in the first column weight cells 401, 405, 409, and 413 and the second column weight cells 402, 406, 410, and 414.

The weight cells 401 and 402 in the first row may transfer a first output current to the first ADC 601 in response to the input data I0. The weight cells 405 and 406 in the second row may transfer a second output current to the second ADC 602 in response to the input data I1. The weight cells 409 and 410 in the third row may transfer a third output current to the third ADC 603 in response to the input data I2. The weight cells 413 and 414 in the fourth row may transfer a fourth output current to the fourth ADC 604 in response to the input data I3.

The first ADC 601 may perform a multiplication operation between the first weight and the input data I0 by converting the first output current into a first digital code. The second ADC 602 may perform a multiplication operation between the second weight and the input data I1 by converting the second output current into a second digital code. The third ADC 603 may perform a multiplication operation between the third weight and the input data I2 by converting the third output current into a third digital code. The fourth ADC 604 may perform a multiplication operation between the fourth weight and the input data I3 by converting the fourth output current into a fourth digital code.

The PCA 720 may perform a MAC operation with respect to the input data I0, the input data I1, the input data I2, and the input data I3, the first weight, the second weight, the third weight, and the fourth weight by adding the first digital code, the second digital code, the third digital code, and the fourth digital code.

Hereinafter, an operation in the case when the bit-precision of the weight is 1 bit is described.

Referring back to FIG. 2, when the bit-precision of the weight is 1 bit, the input data I0 may be input to a first row of the weight cell array 400, the input data I1 may be input to a second row of the weight cell array 400, the input data I2 may be input to a third row of the weight cell array 400, and the input data I3 may be input to a fourth row of the weight cell array 400. The weight cell array 400 may store the first weight of 1 bit in the weight cell 401 of the first row. The weight cell array 400 may store the second weight of 1 bit in the weight cell 405 of the second row. The weight cell array 400 may store the third weight of 1 bit in the weight cell 409 of the third row. The weight cell array 400 may store the fourth weight of 1 bit in the weight cell 413 of the fourth row.

When the bit-precision of the weight is 1 bit, the weight column selector 500 may open the fourth switch 504, the third switch 503 and the second switch 502, and may close the first switch 501. For example, the weight column selector 500 may cut off power supply to the PMOS transistors included in the fourth column weight cells 404, 408, 412, and 416, the third column weight cells 403, 407, 411, and 415 and the second column weight cells 402, 406, 410, and 414 of the weight cell array 400. However, the weight cells 404, 408, 412, and 416 in the fourth column, the weight cells 403, 407, 411, and 415 in the third column, and the weight cells 402, 406, 410, and 414 in the second column may retain previously stored weights. Also, the weight column selector 500 may supply power to the PMOS transistors included in the first column weight cells 401, 405, 409, and 413.

The weight cell 401 in the first row may transfer a first output current to the first ADC 601 in response to the input data I0. The weight cell 405 in the second row may transfer a second output current to the second ADC 602 in response to the input data I1. The weight cell 409 in the third row may transfer a third output current to the third ADC 603 in response to the input data I2. The weight cell 413 in the fourth row may transfer a fourth output current to the fourth ADC 604 in response to the input data I3.

The first ADC 601 may perform a multiplication operation between the first weight and the input data I0 by converting the first output current into a first digital code. The second ADC 602 may perform a multiplication operation between the second weight and the input data I1 by converting the second output current into a second digital code. The third ADC 603 may perform a multiplication operation between the third weight and the input data I2 by converting the third output current into a third digital code. The fourth ADC 604 may perform a multiplication operation between the fourth weight and the input data I3 by converting the fourth output current into a fourth digital code.

The PCA 720 may perform a MAC operation with respect to the input data I0, the input data I1, the input data I2, and the input data I3, the first weight, the second weight, the third weight, and the fourth weight by adding the first digital code, the second digital code, the third digital code, and the fourth digital code.

FIG. 4B is a diagram illustrating a connection relationship between a weight cell array and a weight column selector according to some example embodiments.

Referring to FIG. 4B, the weight column selector 500 may be connected to the weight cells 401, 405, 409, and 413 by the first switch 501. The weight column selector 500 may be connected to the weight cells 402, 406, 410, and 414 by the second switch 502. The weight column selector 500 may be connected to the weight cells 403, 407, 411, and 415 by the third switch 503. The weight column selector 500 may be connected to the weight cells 404, 408, 412, and 416 by the fourth switch 504.

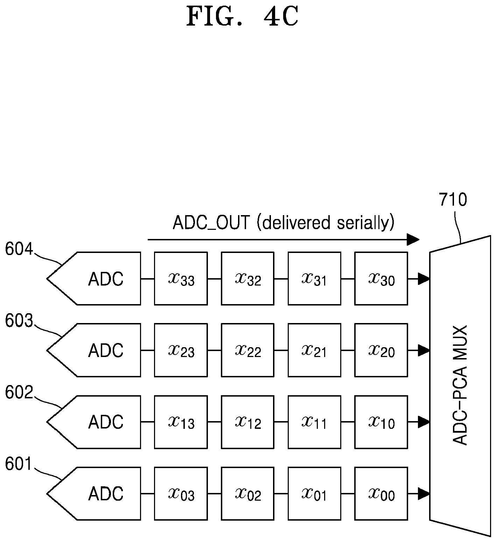

FIG. 4C is a diagram illustrating digital codes transmitted by a first ADC, a second ADC, a third ADC, and a fourth ADC to an ADC-PCA MUX according to some example embodiments. FIG. 4C may be described with reference to FIGS. 1 and 2.

Referring to FIG. 4C, the first ADC 601 may transmit bits of $x_{00}$, $x_{01}$, $x_{02}$, and $x_{03}$ to the ADC-PCA MUX 710.

The second ADC 602 may transmit bits of $x_{10}$, $x_{11}$, $x_{12}$, and $x_{13}$ to the ADC-PCA MUX 710. The third ADC 603 may transmit bits of $x_{20}$, $x_{21}$, $x_{22}$, and $x_{23}$ to the ADC-PCA MUX 710. The fourth ADC 604 may transmit bits of $x_{30}$, $x_{31}$, $x_{32}$, and $x_{33}$ to the ADC-PCA MUX 710.

Xij may be expressed as in Equation 1 below in bit-wise presentation.

### [Equation 1]

$$X_{ij} = RWL * SWITCH_i * W_{ij}$$

In Equation 1, RWL may refer to a word line or row of the weight cell array 400. $SWITCH_i$ may refer to an i-th switch, and the first switch may refer to the fourth switch 504, the second switch may refer to the third switch 503, the third switch may refer to the second switch 502, and the fourth switch may refer to the first switch 501 of FIG. 4A. $W_{ij}$ may refer to the weight cells 401, 402, 403, 404, 405, 406, 407, 408, 409, 410, 411, 412, 413, 414, 415, and 416 of the weight cell array 400 of FIG. 2.

Xij may be expressed as Equation 2 below in a row-wise representation.

### [Equation 2]

$$X_{ij} = \sum_{j=0}^{3} 2^\wedge j \ * RWL * SWITCH_i * W_{ij}$$

In Equation 2, RWL may refer to a word line of the weight cell array 400. $SWITCH_i$ may refer to an $i^{th}$ switch, and the first switch may refer to the fourth switch 504 of FIG. 4A, the second switch may refer to the third switch 503, the third switch may refer to the second switch 502, and the fourth switch may refer to the first switch 501 of FIG. 4A. Wij may refer to weight cells 401, 402, 403, 404, 405, 406, 407, 408, 409, 410, 411, 412, 413, 414, 415, and 416 of the weight cell array 400 of FIG. 2.

The output y of the PCA 720 is expressed as Equation 3 below.

### [Equation 3]

$$
\begin{aligned}
y &= \sum_{k}^{n} a_k(1bit) \times w_k(16/n\ bit) \quad , where\ n = (1,2,4,8,16) \\
&= \sum_{i=0}^{3}\left(16^{\mathbf{mod2(i)}} \times \sum_{j=0}^{3} 2^j * x_{ij} \right) \quad , W = 8'b \\
&= \sum_{i=0}^{3}\left(\sum_{j=0}^{3} 2^j * x_{ij} \right) \quad , W = 4'b \\
&= \sum_{i=0}^{3}\left(\sum_{j=0}^{3} 2^j * x_{ij} \right) \quad , W = 2'b \\
&= \sum_{i=0}^{3}\left(\sum_{j=0}^{3} 2^j * x_{ij} \right) \quad , W = 1'b
\end{aligned}
$$

In Equation 3, y may denote an output of the PCA 720 at a bit-position. A_k may represent 1 bit of input data. W_k may refer to a weight. When N=1, the weight W may be 16 bits. In the second equation above, when N=2, the weight W may be 8 bits. In the third equation above, when N=3, the weight W may be 4 bits. In the fourth equation above, when n=8, the weight W may be 2 bits. In the fifth equation above, when n = 16, the weight W may be 1 bit.

An output at cycle n of the ICA 730 is shown in Equation 4 below.

### [Equation 4]

$$z\_(n+1) = (z\_n >> 1) + y\_(n+1)$$

In Equation 4, y_(n+1) is a value calculated by the PCA 720. When a value obtained by right-shifting an output z_n of the ICA 730 in the cycle n and an output y_(n+1) of the PCA 720 in the cycle n+1 are added, the addition result may be an output of the ICA 730 in the cycle n+1.

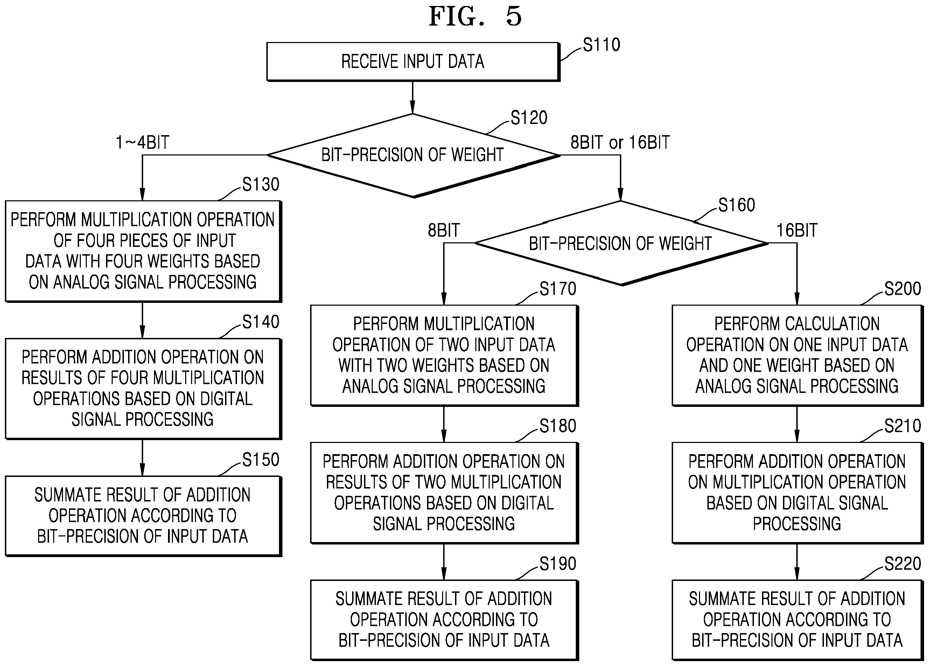

FIG. 5 is a flowchart illustrating a method of operating the processing element 200 according to some example embodiments. FIG. 5 may be described with reference to FIGS. 1, 2, and 4A.

Referring to FIG. 5A, in operation S110, the processing element 200 may receive input data. In operation S120, the processing element 200 may differently perform an operation based on a bit-precision of weights.

In operation S130, when the bit-precision of the weight is 1 to 4 bits, the processing element 200 may perform multiplication operations between four pieces of input data and four weights based on analog signal processing. In operation S140, the processing element 200 may perform an addition operation on results of the four multiplication operations based on digital signal processing. For example, the processing element 200 may add all of a first digital code generated through the first ADC 601, a second digital code generated through the second ADC 602, a third digital code generated through the third ADC 603, and a fourth digital code generated through the fourth ADC 604.

In operation S150, the processing element 200 may summate the results of the addition operations according to the bit-precision of the input data.

In operation S160, the processing element 200 may differently perform an operation based on the bit-precision of the weights. In operation S170, when the bit-precision of the weight is 8 bits, the processing element 200 may perform a multiplication operation between two pieces of input data and two weights based on analog signal processing. In operation S180, the processing element 200 may perform an addition operation on two results of the multiplication operations based on digital signal processing. For example, the processing element 200 may add all of a first digital code generated through the first ADC 601, a digital code obtained by multiplying a second digital code generated through the second ADC 602 by 16, a third digital code generated through the first ADC 603 and a digital code obtained by multiplying a fourth digital code generated through the fourth ADC 604 by 16. In operation S190, the processing element 200 may summate the results of the addition operations according to the bit-precision of the input data.

In operation S200, when the bit-precision of the weight is 16 bits, the processing element 200 may perform a calculation operation between one piece of input data and one weight based on analog signal processing. In operation S210, the processing element 200 may perform addition on the result of the multiplication operation based on digital signal processing. For example, the processing element 200 may add all of a first digital code generated through the first ADC 601, a digital code obtained by multiplying a second digital code generated through the second ADC 602 by 16, a digital code obtained by multiplying a third digital code generated through the third ADC 603 by $16^2$, and a digital code obtained by multiplying a fourth digital code generated through the fourth ADC 604 by $16^3$. In operation S220, the processing element 200 may summate the results of the addition operations according to the bit-precision of the input data.

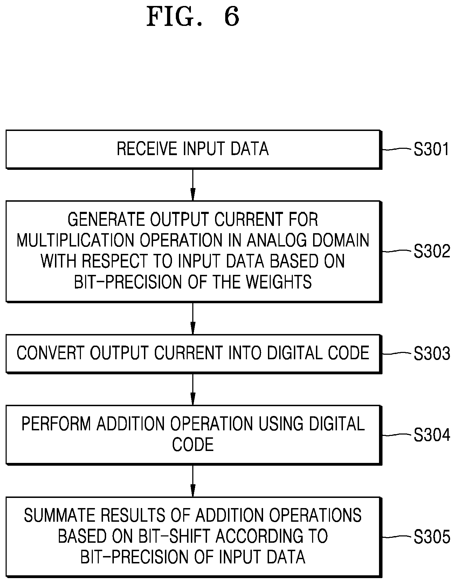

FIG. 6 is a flowchart illustrating a method of operating the processing element 200 according to some example embodiments. FIG. 6 may be described with reference to FIGS.1, 2, and 4A.

Referring to FIG. 6, in operation S301, the processing element 200 may receive input data. In operation S302, the processing element 200 may generate an output current for a multiplication operation in an analog domain with respect to the input data based on the bit-precision of the weights. The processing element 200 may generate first to fourth output currents for multiplication operations in the analog domain with respect to the input data based on the bit-precision of the weights. In operation S303, the processing element 200 may convert the output current into a digital code. For example, the processing element 200 may convert first to fourth output currents into first to fourth digital codes, respectively. In operation S304, the processing element 200 may perform an addition operation using a digital code. For example, the processing element 200 may perform an addition operation using the first to fourth digital codes. In operation S305, the processing element 200 may summate the results of the addition operations based on a bit-shift according to the bit-precision of the input data.

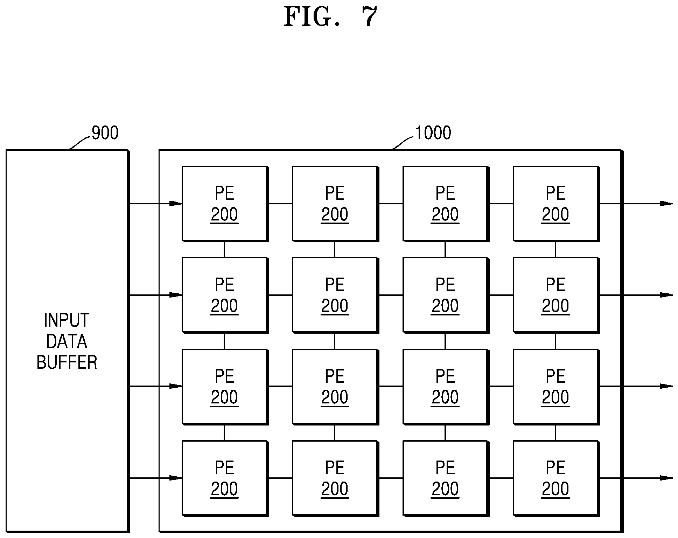

FIG. 7 is a block diagram of an artificial neural network accelerator based on a systolic array structure according to some example embodiments. FIG. 7 may be described with reference to FIGS. 1 and 2.

Referring to FIG. 7, the artificial neural network accelerator may include an input data buffer 900 and a systolic array 1000. The systolic array 1000 may include a plurality of processing elements 200. Referring to FIG. 7, although the systolic array 1000 includes 16 processing elements 200, the number of processing elements is just an example and the systolic array 1000 may include various numbers of processing elements. Also, unlike the embodiment of FIG. 1, the processing elements 200 of FIG. 7 may include an input buffer 100 and an output buffer 800 as needed.

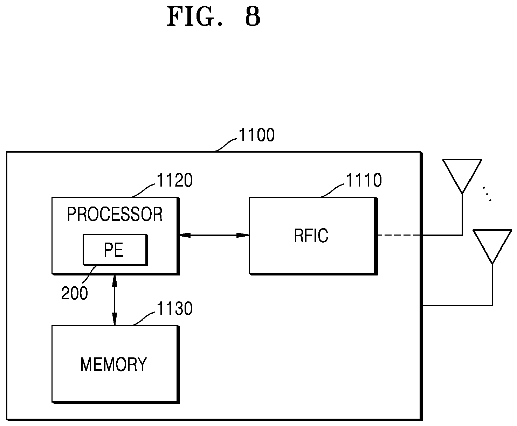

FIG. 8 is a block diagram of a wireless communication device 1100 according to some example embodiments. FIG. 8 may be described with reference to FIGS. 1 and 2.

Referring to FIG. 8, the wireless communication device 1100 may include a processor 1120, a radio frequency integrated circuit (RFIC) 1110, and a memory 1130. For convenience of description, one processor 1120, one RFIC 1110, and one memory 1130 are illustrated, but the processor 1120, the RFIC 1110, and the memory 1130 may be plural and are not limited to the embodiment described above.

The processor 1120 may control the RFIC 1110 and the memory 1130 and may include the PE 200 according to some example embodiments. For example, the processor 1120 may be an artificial neural network accelerator including processing elements 200.

The wireless communication device 1100 may include a plurality of antennas, and the RFIC 1110 may transmit and/or receive radio signals through one or more antennas. At least some of the plurality of antennas may correspond to transmission antennas. A transmission antenna may transmit a radio signal to an external device (e.g., another user equipment (UE) and/or base station (BS)) other than the wireless communication device 1100. At least some of the remaining antennas may correspond to receiving antennas. A receiving antenna may receive a radio signal from an external device.

Any of the elements and/or functional blocks disclosed above may include or be implemented in processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. The processing circuitry may include electrical components such as at least one of transistors, resistors, capacitors, etc. The processing circuitry may include electrical components such as logic gates including at least one of AND gates, OR gates, NAND gates, NOT gates, etc.

While various inventive concepts have been particularly shown and described with reference to various example embodiments thereof, it will be understood that various changes in form and details may be made therein without departing from the scope of the following claims.

## Claims

1. A processing element comprising:

   an analog operation circuit configured to receive input data from an input buffer and to generate one or more output currents, the one or more output currents associated with a multiplication operation of the input data and weights, the multiplication operation based on a bit-precision of stored weights;
   one or more analog-to-digital converters, ADCs, each configured to convert the one or more output currents into one or more digital codes; and
   a digital operation circuit configured to perform an addition operation using the one or more digital codes based on the bit-precision of the stored weights and to perform a summation operation on a resulting value of the addition operation based on a bit-precision of the input data.

2. The processing element of claim 1, wherein,

   in response to the bit-precision of the weight being 1 bit, 2 bits, 3 bits, or 4 bits,
   the processing element is configured to perform an addition operation of adding all of the one or more digital codes.

3. The processing element of claim 1 or 2, wherein,

   in response to the bit-precision of the input data being 8 bits,
   the processing element is configured to perform an addition operation of adding a digital code of a first group among the one or more digital codes and a code generated by multiplying a digital code of a second group by 16.

4. The processing element of claim 1, wherein:

   the analog operation circuit comprises a weight cell array including 16 cells that have a 4 by 4 structure and each configured to store a weight of 1 bit, wherein a first column of the weight cell array is a least significant bit, LSB, a second column of the weight cell array is a left bit of the LSB, a third column of the weight cell array is a left bit of the second column, and a fourth column of the weight cell array is a most significant bit, MSB;
   the one or more ADCs comprise a first ADC connected to a first row of the weight cell array, a second ADC connected to a second row of the weight cell array, a third ADC connected to a third row of the weight cell array, and a fourth ADC connected to a fourth row of the weight cell array;
   the digital operation circuit comprises a digital code adder connected to the first ADC, the second ADC, the third ADC, and the fourth ADC; and
   the digital operation circuit further comprises an input data accumulator connected to the digital code adder,
   wherein the weight cell array is configured to receive input data from the input buffer, and to generate a first output current, a second output current, a third output current, and a fourth output current, the first through fourth output currents associated with performing a multiplication operation between the input data with the weight, the multiplication operation based on a bit-precision of the weight,

the first ADC is configured to covert the first output current into a first digital code, the second ADC is configured to convert the second output current into a second digital code, the third ADC is configured to convert the third output current into a third digital code, and the fourth ADC is configured to convert the fourth output current into a fourth digital code,

the digital code adder is configured to generate a fifth digital code by performing an addition operation using the first digital code, the second digital code, the third digital code, and the fourth digital code based on the bit-precision of the weight, and

the input data accumulator is configured to sum the fifth digital code based on a bit-precision of the input data.

5. The processing element of claim 4, wherein,

in response to the bit-precision of the weight being 16 bits,
the first row, the second row, the third row, and the fourth row of the weight cell array are configured to all receive the same input data.

6. The processing element of claim 5, wherein the fifth digital code includes a code generated by adding a code generated by multiplying the first digital code and the second digital code by 16, a code generated by multiplying the third digital code by 16^2, and a code generated by multiplying the fourth digital code by 16^3.

7. The processing element of claim 4, 5 or 6, wherein,

in response to the bit-precision of the weight being 8 bits,
the first row and the second row of the weight cell array are configured to receive first input data, and the third row and the fourth row receive second input data.

8. The processing element of claim 7, wherein the fifth digital code includes a code generated by adding

a code generated by multiplying the first digital code and the second digital code by 16, with
a code generated by multiplying the third digital code and the fourth digital code by 16.

9. The processing element of any of claims 4 to 8, wherein,

in response to the bit-precision of the weight being 4 bits,
the first row of the weight cell array is configured to receive first input data, the second row of the weight cell array is configured to receive second input data, the third row of the weight cell array is configured to receive third input data, and the fourth row of the weight cell array is configured to receive fourth input data.

10. The processing element of claim 9, wherein the fifth digital code includes a code generated by adding the first digital code, the second digital code, the third digital code, and the fourth digital code.

11. The processing element of any of claims 4 to 10, further comprising:

a weight column selector configured to receive a 2-bit selection signal,
wherein the weight column selector includes a first switch connected to the first column of the weight cell array, a second switch connected to the second column of the weight cell array, a third switch connected to the third column of the weight cell array, a fourth switch connected to the fourth column of the weight cell array, and a VDD power source.

12. The processing element of claim 11, wherein each of the cells in the first row of the weight cell array includes

a first bit cell configured to store the weight, and
a first current control circuit connected to the first bit cell, the weight column selector, the input buffer, and the first ADC and configured to control the first output current,
each of the cells in the second row of the weight cell array includes

a second bit cell configured to store the weight, and
a second current control circuit connected to the second bit cell, the weight column selector, the input buffer, and the second ADC, and configured to control the second output current,

each of the cells in the third row of the weight cell array includes

a third bit cell configured to store the weight; and
a third current control circuit connected to the third bit cell, the weight column selector, the input buffer, and the third ADC and configured to control the third output current, and

each of the cells in the fourth row of the weight cell array includes

a fourth bit cell configured to store the weight. and
a fourth current control circuit connected to the fourth bit cell, the weight column selector, the input buffer, and the fourth ADC, and configured to control the fourth output current.

13. The processing element of claim 12, wherein,

in response to the bit-precision of the weight being 3 bits,
the first row of the weight cell array is configured to receive first input data, the second row is configured to receive second input data, the third row is configured to receive third input data, and the fourth row is configured to receive fourth input data, and
the weight column selector is configured to cut off power supply to first, second, third, and fourth current control circuits of the cells of the fourth column based on the selection signal.

14. The processing element of claim 13, wherein the fifth digital code includes a code obtained by adding the first digital code, the second digital code, the third digital code, and the fourth digital code.

15. An artificial neural network accelerator comprising:

an input data buffer; and
a plurality of processing elements having a systolic array structure,
wherein a first group of the plurality of processing elements are configured to receive input data from the input data buffer, and
each of the processing elements is a processing element in accordance with any of claims 4 to 14.

# FIG. 1

200: PE
300 :ANALOG CALCULATOR

EP 4 361 794 A1

# FIG. 2

ANALOG COMPARTMENT

DIGITAL COMPARTMENT

INPUT BUFFER 100

INPUT DATA(I3)
RWL4

| W33 416 | W32 415 | W31 414 | W30 413 | FOURTH ADC | 1~4 604 |

INPUT DATA(I2)
RWL3

| W23 412 | W22 411 | W21 410 | W20 409 | THIRD ADC | 1~4 603 |

INPUT DATA(I1)
RWL2

| W13 408 | W12 407 | W11 406 | W10 405 | SECOND ADC | 1~4 602 |

INPUT DATA(I0)
RWL1

| W03 404 | W02 403 | W01 402 | W00 401 | FIRST ADC | 1~4 601 |

WEIGHT COLUMN SELECTOR 500

ADC-PCA FETCH-MUX 710

PCA (Per-Cycle Adder) 720 +

2~16

ICA (Inter-Cycle Adder) 730 +

>>1

OUTPUT BUFFER 800

300

700

EP 4 361 794 A1

# FIG. 3A

INPUT DATA → INPUT BUFFER — 100

INPUT DATA(I1)

INPUT DATA(I0)

| 416 | 415 | 414 | 413 |
| 412 | 411 | 410 | 409 |
| 408 | 407 | 406 | 405 |
| 404 | 403 | 402 | 401 |

WEIGHT COLUMN SELECTOR — 500

FIG. 3B

INPUT
DATA(I0)

INPUT
DATA

INPUT
BUFFER

100

416 | 415 | 414 | 413

412 | 411 | 410 | 409

408 | 407 | 406 | 405

404 | 403 | 402 | 401

WEIGHT COLUMN SELECTOR

500

# FIG. 4A

EP 4 361 794 A1

# FIG. 4B

| W33 | W32 | W31 | W30 |
|-----|-----|-----|-----|
| 416 | 415 | 414 | 413 |
| W23 | W22 | W21 | W20 |
| 412 | 411 | 410 | 409 |
| W13 | W12 | W11 | W10 |
| 408 | 407 | 406 | 405 |
| W03 | W02 | W01 | W00 |
| 404 | 403 | 402 | 401 |

2

504    503    502    501

VDD POWER SOURCE

505

500

# FIG. 4C

ADC_OUT (delivered serially)

710

604 — ADC — $x_{33}$ — $x_{32}$ — $x_{31}$ — $x_{30}$ →

603 — ADC — $x_{23}$ — $x_{22}$ — $x_{21}$ — $x_{20}$ →

602 — ADC — $x_{13}$ — $x_{12}$ — $x_{11}$ — $x_{10}$ →

601 — ADC — $x_{03}$ — $x_{02}$ — $x_{01}$ — $x_{00}$ →

ADC-PCA MUX

**FIG. 5**

S110 — RECEIVE INPUT DATA

S120 — BIT-PRECISION OF WEIGHT

1~4BIT:

S130 — PERFORM MULTIPLICATION OPERATION OF FOUR PIECES OF INPUT DATA WITH FOUR WEIGHTS BASED ON ANALOG SIGNAL PROCESSING

S140 — PERFORM ADDITION OPERATION ON RESULTS OF FOUR MULTIPLICATION OPERATIONS BASED ON DIGITAL SIGNAL PROCESSING

S150 — SUMMATE RESULT OF ADDITION OPERATION ACCORDING TO BIT-PRECISION OF INPUT DATA

8BIT or 16BIT:

S160 — BIT-PRECISION OF WEIGHT

8BIT:

S170 — PERFORM MULTIPLICATION OPERATION OF TWO INPUT DATA WITH TWO WEIGHTS BASED ON ANALOG SIGNAL PROCESSING

S180 — PERFORM ADDITION OPERATION ON RESULTS OF TWO MULTIPLICATION OPERATIONS BASED ON DIGITAL SIGNAL PROCESSING

S190 — SUMMATE RESULT OF ADDITION OPERATION ACCORDING TO BIT-PRECISION OF INPUT DATA

16BIT:

S200 — PERFORM CALCULATION OPERATION ON ONE INPUT DATA AND ONE WEIGHT BASED ON ANALOG SIGNAL PROCESSING

S210 — PERFORM ADDITION OPERATION ON MULTIPLICATION OPERATION BASED ON DIGITAL SIGNAL PROCESSING

S220 — SUMMATE RESULT OF ADDITION OPERATION ACCORDING TO BIT-PRECISION OF INPUT DATA

# FIG. 6

| | |
|---|---|
| RECEIVE INPUT DATA | S301 |

| | |
|---|---|
| GENERATE OUTPUT CURRENT FOR MULTIPLICATION OPERATION IN ANALOG DOMAIN WITH RESPECT TO INPUT DATA BASED ON BIT-PRECISION OF THE WEIGHTS | S302 |

| | |
|---|---|
| CONVERT OUTPUT CURRENT INTO DIGITAL CODE | S303 |

| | |
|---|---|
| PERFORM ADDITION OPERATION USING DIGITAL CODE | S304 |

| | |
|---|---|
| SUMMATE RESULTS OF ADDITION OPERATIONS BASED ON BIT-SHIFT ACCORDING TO BIT-PRECISION OF INPUT DATA | S305 |

# FIG. 7

# FIG. 8

Europäisches
Patentamt

European
Patent Office

Office européen
des brevets

# EUROPEAN SEARCH REPORT

Application Number

EP 23 20 4752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/318628 A1 (CHERUPALLY SAI KIRAN [US] ET AL) 6 October 2022 (2022-10-06) * paragraph [0044] – paragraph [0073] * ----- | 1-15 | INV. G06F7/544 |
| A | CHEN ZHIYU ET AL: "MC2-RAM: An In-8T-SRAM Computing Macro Featuring Multi-Bit Charge-Domain Computing and ADC-Reduction Weight Encoding", 2021 IEEE/ACM INTERNATIONAL SYMPOSIUM ON LOW POWER ELECTRONICS AND DESIGN (ISLPED), IEEE, 26 July 2021 (2021-07-26), pages 1-6, XP033952206, DOI: 10.1109/ISLPED52811.2021.9502505 [retrieved on 2021-07-29] * Sections III, IV, V * ----- | 1-15 | |
| A | US 2022/113942 A1 (YEN SHE-HWA [US] ET AL) 14 April 2022 (2022-04-14) * paragraph [0029] – paragraph [0052] * ----- | 1-15 | |

TECHNICAL FIELDS SEARCHED (IPC)

G06F
G06N

The present search report has been drawn up for all claims

| Place of search | Date of completion of the search | Examiner |
|---|---|---|
| Munich | 21 February 2024 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 4752

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2024

| Patent document cited in search report | Publication date | Patent family member(s) | Publication date |
|---|---|---|---|
| US 2022318628 A1 | 06-10-2022 | NONE | |
| US 2022113942 A1 | 14-04-2022 | NONE | |

For more details about this annex : see Official Journal of the European Patent Office, No. 12/82